# EUROPÄISCHE PATENTSCHRIFT

(11) **EP 1 161 317 B1**
(45) Veröffentlichungstag und Bekanntmachung des Hinweises auf die Patenterteilung: **15.01.2003**
(21) Anmeldenummer: 00914052.6
(22) Anmeldetag: 02.03.2000
(51) Int. Cl.: B21D 43/10

(54) **TRANSPORTSYSTEM**
TRANSPORT SYSTEM
SYSTEME DE TRANSPORT

(30) Priorität: 17.03.1999 DE 19911796
(43) Veröffentlichungstag der Anmeldung: 12.12.2001
(73) Patentinhaber: Müller Weingarten AG, D-88250 Weingarten (DE)
(72) Erfinder: HARSCH, Erich, D-88250 Weingarten (DE); REICHENBACH, Rainer, D-88281 Schlier (DE)
(74) Vertreter: Patentanwälte Eisele, Otten, Roth & Dobler
(86) Internationale Anmeldenummer: DE0000651
(87) Internationale Veröffentlichungsnummer: WO00054904

(56) Entgegenhaltungen:
- EP-A- 0 658 403
- DE-A- 3 040 655
- GB-A- 2 086 285
- US-A- 4 589 819
- US-A- 5 452 981

## Beschreibung

Die Erfindung betrifft eine Einrichtung zum Transportieren von Werkstücken nach dem Oberbegriff des Anspruches 1.

### Stand der Technik

Erfordert die Herstellung eines Werkstückes mehrere Arbeitsoperationen, so werden zur wirtschaftlichen Fertigung des Blechteils die erforderlichen Einzeloperationen in einer sogenannten Transferpresse oder Pressenstraße durchgeführt. Die Anzahl der Werkzeuge entspricht dann der Anzahl der Arbeitsstufen, die zur Herstellung erforderlich sind. Derartige Stufen- oder Transferpressen besitzen eine Transporteinrichtung, mit welcher die Werkstücke von einer Arbeitsstation zur nächsten weitertransportiert werden.

Im Regelfall sind heute solche Transporteinrichtungen mit Tragschienen ausgerüstet die sich durch die gesamte Länge der Umformmaschine erstrecken. Zum Transport der Teile sind die Tragschienen mit Greifer- oder Halteelementen bestückt. Unterschieden wird dabei, je nach Bewegungsablauf, zwischen einem mit Saugertraversen bestückten Zwei-Achstransfer oder einem mit Greiferelementen versehenen Drei-Achstransfer. Als Zusatzbewegung kann auch eine Verschwenkung zur Lageveränderung des Teiles während dem Transportschritt erforderlich sein.

Die Transferbewegung wird über Kurven eingeleitet, die über Bewegungsübertragungselemente mit dem Stößelantrieb zwangssynchronisiert sind. Die Herstellung von insbesonders großflächigen Teilen führte zur Entwicklung der Großteilstufenpressen in immer größeren Dimensionen bezogen auf die Umformkraft und die Transportwege. Werkzeugabstände in einer Größenordnung von 3000 mm sind heute durchaus üblich und damit sind auch entsprechende Transportschritte erforderlich.

Als Ergebnis dieser Entwicklung stehen die zu beschleunigenden und abzubremsenden Massen der Transfersysteme in einem völligen Gegensatz zu den geringen Massen der zu transportierenden Teile.

Ein weiterer Nachteil ist der starre Bewegungsablauf der durch die Kurvenantriebe vorgegeben wird. Bei Umrüstung auf ein neues Werkstück müßten in der Regel auch die Transferkurven angepaßt werden.

Um diese aufgezeigten Nachteile zu vermeiden befassen sich jetzt Schutzrechtsanmeldungen mit der Ablösung des bisherigen Transfersystems durch eine entsprechende Anzahl von zwischen den Bearbeitungsstufen angeordnete, mit Eigenantrieb ausgerüstete Transfersysteme. Eine solche Anordnung ist in der EP 0 672 480 B1 offenbart. An den Ständern angeordnete Transfersysteme sind mit einer Anzahl von Antrieben ausgerüstet, die in Wirkverbindung mit den Bewegungsübertragungsmitteln den Teiletransport ausführen. Als Besonderheit ist das System sowohl als Zwei-Achstransfer mit Saugerbalken, als auch als Drei-Achstransfer mit Greifern umrüstbar. Allerdings erfordert dieser universelle Einsatz einen entsprechenden baulichen Aufwand.

Ebenfalls in jedem Ständerbereich angeordnet ist eine in der DE 196 544 75 A1 offenbarte Transfereinrichtung. In dieser Anmeldung werden für den Antrieb Elemente die als -Parallelkinematik- bekannt sind verwendet. In Abwandlung dieser bekannten Bewegungselemente wird jedoch keine teleskopartige Verlängerung der Antriebsstäbe vorgenommen, sondern bei konstanter Stablänge werden die Anlenkpunkte verändert und damit die Transportbewegungen erreicht. Die die Kräfte bzw. Drehmomente aufnehmenden Anlenkpunkte sind im Abstand zueinander nicht konstant und insbesondere wenn diese Punkte aufgrund der gewünschten Fahrkurve dicht beieinander liegen können Abstützungsprobleme auftreten. Zur Erhöhung der Systemsteifigkeit werden auch weitere zueinander parallele Lenker vorgeschlagen die untereinander mit Quertraversen verbunden werden. Zur Erreichung eines funktionssicheren Transportes von großflächigen Teilen wird das vorgeschlagene System entsprechend aufwendig.

Aus der US-A-5 452 981 ist eine Einrichtung zum Transportieren von Werkstücken nach dem Oberbegriff des Anspruchs 1 bekannt geworden. Dabei arbeitet die Einrichtung mit einer Gewindespindel, die zum einen einen schlechten Wirkungsgrad und damit eine nicht unerhebliche Verlustleistung aufweist. Darüber hinaus sind derartige Antriebe träge und können einer hochdynamischen Antriebsweise nicht gerecht werden.

### Aufgabe und Vorteil der Erfindung

Der Erfindung liegt die Aufgabe zugrunde mit einfachen Maßnahmen ein hochflexibles und präzises Transportsystem zu schaffen, welches unabhängig von der jeweiligen Transportlage eine gleichmäßig sichere Abstützung der auftretenden Kräfte und Momente gewährleistet.

Diese Aufgabe wird ausgehend von einem Transportsystem nach dem Oberbegriff des Anspruch 1, durch die kennzeichnenden Merkmale des Anspruch 1 gelöst. In den Unteransprüchen sind vorteilhafte und zweckmäßige Weiterbildungen des Transportsystems angegeben.

Der Erfindung liegt der Gedanke zugrunde, daß durch Drehzahl- und Drehsinnregelung von 2 Antrieben zueinander und in Wirkverbindung mit Bewegungsubertragungsmittel beliebige zweiachsige Bewegungen in horizontaler und/oder vertikaler Richtung möglich sind. 2 hochdynamische Antriebe werden dabei durch einfache Regelvorgänge, die den Drehsinn und die Drehzahl beeinflussen, geregelt. Diese Regelung erzeugt durch Bewegungsüberlagerung in der X- und Y-Achse jede programmierte Fahrkurve in einer Ebene.

Wird als Bewegungsübertragungsmittel ein Zahnstangen- oder Zahnriementrieb verwendet, wobei die Einleitung der Fahrkurve auf einen Schwenk- bzw. Transportarm über ein Zahnrad erfolgt, so ist damit auch durch den unveränderbaren Zahnraddurchmesser eine gleichmäßige Drehmomentenabstützung gewährleistet. Die jeweilige Bewegungsposition führt zu keinerlei Veränderung des wirksamen Hebelarms zur Drehmomenteneinleitung bzw. Abstützung und gewährleistet damit einen sicheren und präzisen Teiletransport.

Je nach Aufgabenstellung kann das Transportsystem in einfacher Ausführung oder in zweifacher Ausführung spiegelbildlich zueinander jeweils quer zur Pressentransportrichtung im Ständerbereich angebracht werden. Bei paarweisem Einsatz sind die beiden Transportsysteme z.B. mit einem die Teile tragenden Saugerbalken verbunden. Natürlich kann bei einer Doppelteilfertigung auch jede Transporteinrichtung über einen eigenen einseitig abgestützten Saugerbalken verfügen und die Transportsysteme unabhängig voneinander angetrieben werden. Eine Synchronisation der Teiletransporteinrichtung mit dem Pressenstößel kann mit bekannten elektronischen Mitteln wie der sog. -elektronischen Welle- erfolgen.

Im z.B. Simulationsbetrieb ermittelten Fahrkurven der einzelnen Transportstufen können flexibel gestaltet werden, insbesondere in Abhängigkeit der Teileumformung und der Stößellage. Als Vorteil ergeben sich daraus eine optimale Nutzung der Freiheitsgrade und durch zeitversetztes Umformen in den einzelnen Pressenstufen eine günstige Verteilung der Pressenantriebsenergie.

Bei Verzicht auf eine Zwischenablage oder aus Teiletransportgründen kann als zusätzliche Bewegung ein schwenken der Saugertraverse vorgesehen werden. Durch den einfachen Aufbau der vorgeschlagenen Transporteinrichtung ist der Einbau der zusätzlichen Schwenkbewegung ohne Probleme und bei nur geringer Masseveränderung möglich.

Die Anbaulage des Transportsystem ist variabel und kann z.B. oberhalb, als auch unterhalb der Teiletransportebene erfolgen. Maßnahmen zum Gewichtsausgleich, z.B. durch den Anbau von Zylindern, sowohl an dem eigentlichen Fahrschlitten, als auch am Transportarm führen zu einer Entlastung der Antriebe und der Bewegungsübertragungsmittel. Der durch den konstruktiven Aufbau der Presse vorgegebene Abstand der Umformstufen wird durch die schmale Bauform des Transportsystems nicht vergrößert. Anderseits können trotz dieser platzsparenden Bauform große Transportwege problemlos mit geringer Masse und großer Präzision ausgeführt werden.

Weitere Einzelheiten und Vorteile der Erfindung ergeben sich aus der nachfolgenden Beschreibung einer Prinzipdarstellung und von Ausführungsbeispielen:

Die 7 Figuren zeigen:
- Figur 1: Teilansicht einer Großteilstufenpresse mit in Ständerbereich angeordnete Transfereinrichtungen
- Figur 2: Prinzipbild des Transportsystems mit zugeordneter Bewegungstabelle
- Figur 3: Ausführungsbeispiel des Transportsystem
- Figur 4: Variante von Figur 3 mit anderem Anlenkpunkt
- Figur 5: Ein weiteres Ausführungsbeispiel mit Verzahnungsgetriebe
- Figur 6: Ein Ausführungsbeispiel mit Zahnriementrieb
- Figur 7: Variante von Figur 5

### Beschreibung der Ausführungsbeispiele

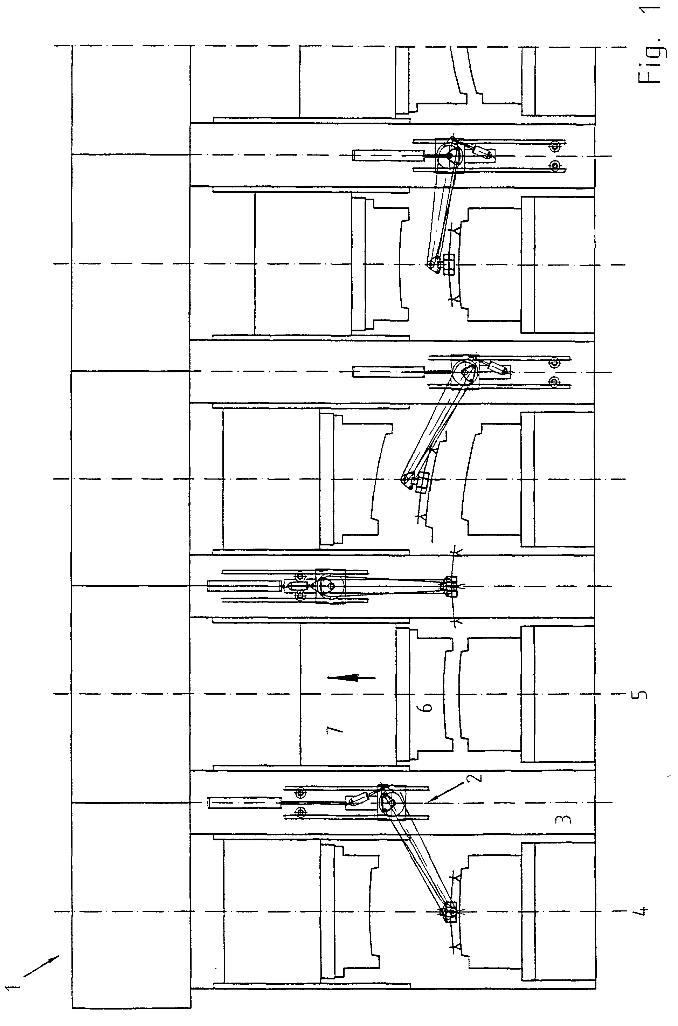

In Figur 1 sind Bearbeitungsstationen bzw. Umformstufen einer Großteilstufenpresse 1 dargestellt. Die erfindungsgemäße Transporteinrichtung 2 ist am Pressenständer 3 angeordnet. Beispielhaft ist das Transportsystem sowohl oberhalb als auch unterhalb der Transportebene montiert. In vereinfachter Darstellung sind unterschiedliche Transportstellungen erkennbar. So findet in Umformstufe 4 die Teileentnahme statt während in Umformstufe 5 der das Werkzeugoberteil 6 tragende Stößel 7 nach erfolgter Umformung vertikal aufwärts fährt. Das zugeordnete Transportsystem 2 befindet sich in seiner Parkstellung. Die Ausführung des Schwenk- bzw. Transportarmes 13 kann in den verschiedensten Formen erfolgen, wie z.B. in der EP 0693 334 A1 des Anmelders angegeben ist.

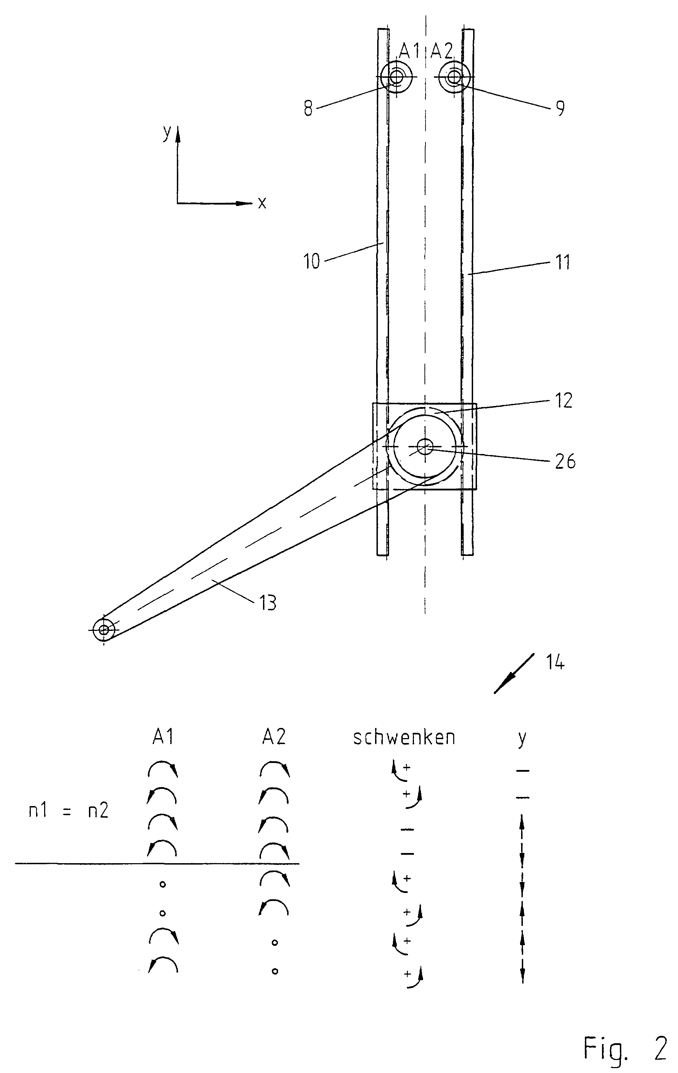

Die Bewegungsabläufe des Transportsystems sind aus Figur 2 zu ersehen. Das Prinzipbild zeigt 2 Antriebe A1, A2 die Zahnräder 8, 9 in eine Drehbewegung versetzen oder in Ruhestellung halten. Diese Zahnräder 8, 9 wirken auf Zahnstangen 10, 11 die durch den Zahnradantrieb verursacht eine entsprechende vertikale Bewegung ausführen.

Der untere Teil der Zahnstangen 10, 11 wirkt gemeinsam auf das Zahnrad 12. Mit diesem Zahnrad 12 ist der Transportarm 13 verbunden mit dem gemeinsamen Bewegungsmittelpunkt 26. Die Bewegungsabläufe des Transportarmes 13 sind aus Tabelle 14 zu ersehen. Dargestellt sind jedoch nur die Bewegungen die sich im Antriebsfall durch gleiche Drehzahlen der Antriebe A1, A2 ergeben.

Wenn z.B. beide Antriebe A1, A2 mit gleicher Drehzahl rechts drehen, so bewirkt dieses über den Antriebsstrang (8, 9, 10, 11) ein rechts drehen des Zahnrades 12 und damit auch eine rechtsgerichtete Schwenkbewegung des mit Zahnrad 12 befestigten Transportarm 13. In der vertikalen (Y-)Achse findet in diesem Fall keine Bewegung statt. Eine Bewegungsüberlagerung, d.h. schwenken und vertikale Bewegung, wird z.B. durch Stillstand von A1 und drehen von A2 erreicht. Wie aus der Tabelle 14 zu ersehen, ist durch entsprechende Drehung oder Stillstand nur der Antriebe A1, A2 jede beliebige programmierbare Fahrkurve in einer Ebene erreichbar. Große Transportwege sind mit dem Vorgeschlagenen problemlos ausführbar. Die identischen Bewegungsabläufe sind natürlich auch mit anderen Antriebskomponenten erreichbar. Werden z.B. Zahnräder 8, 9 und Zahnstangen 10, 11 durch getrennt angetriebene Zahnriemen mit entsprechenden Zahnriemenscheiben ersetzt, so können exakt die gleichen Bewegungen gefahren werden.

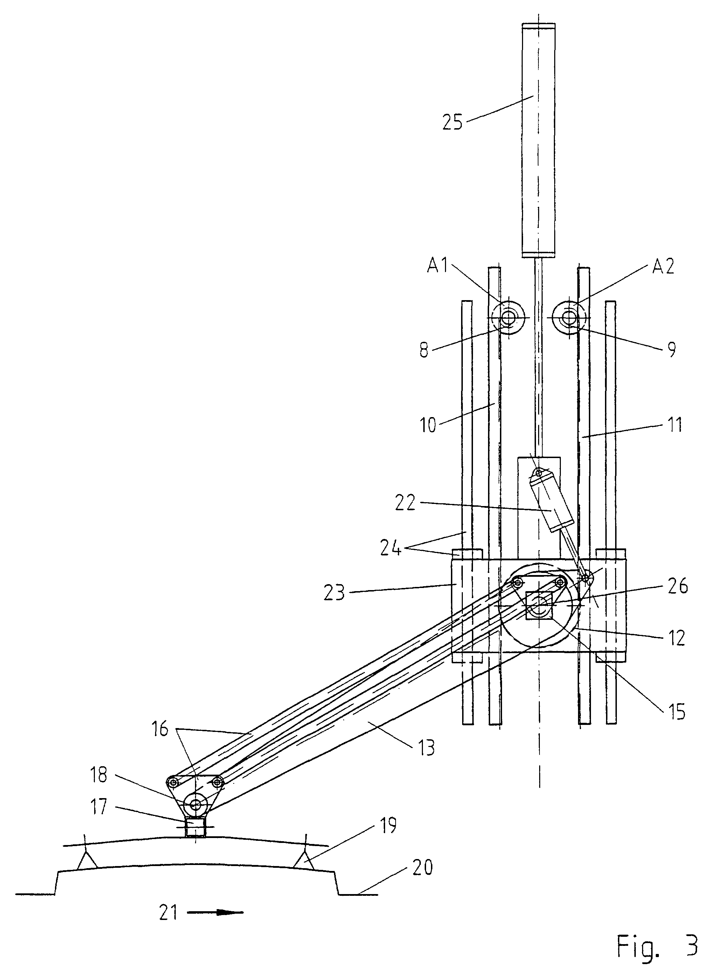

Ein Ausführungsbeispiel zeigt Figur 3.
Der aus Figur 2 bekannte Antriebsstrang ist mit gleichen Positionsnummern versehen. Als weiterer Antrieb ist ein Schwenkantrieb 15 vorgesehen der über Parallelogrammgelenke 16 die am Ende des Transportarmes 13 befestigte Saugertraverse 17 um die Mittelachse 18 schwenken kann. Diese Bewegung ist dann erforderlich, wenn das durch die Saugnäpfe 19 gehaltene Teil 20 während der Transportbewegung in Pressendurchlaufrichtung 21 eine Lageveränderung erhalten soll. Diese Lageänderung dient dazu unterschiedliche Situationen bei Teileentnahme und Teileeinlegen zu ermöglichen. Statt einer Gelenkeinheit können natürlich auch andere Bewegungsübertragungsmittel wie z.B. ein Zahnriementrieb verwendet werden. Zur Reduzierung der bewegten Massen kann der Schwenkantrieb 15 auch stationär, z.B., zwischen den Antrieben A1, A2 angebracht werden. Die gewünschten Bewegungen der Saugertraverse 17 würden dann über eine Zahnstange auf ein Zahnritzel im Bewegungsmittelpunkt 26 eingeleitet. Ist keine zusätzliche Verschwenkung der Saugertraverse 17 vorgesehen, kann der Schwenkantrieb 15 entfallen.

Zur Entlastung der Antriebselemente ist mit dem Transportarm 13 ein Gewichtsausgleichszylinder 22 vorgesehen. Alle dem Transportarm 13 angehörigen Bauteile sind gemeinsam auf einem Schlitten 23 montiert. Der Schlitten 23 ist in einem Linearführungssystem 24 geführt und gelagert. Im Schlitten 23 befindet sich auch eine nicht näher dargestellte Lagerung der Zahnstangen 10, 11.

Durch die vorgeschlagene Anbauform ist es möglich Schlitten 23 und Führung 24 in gewünschter Steifigkeit und Länge auszuführen, ohne den Abstand der Umformstufen und damit den Transportschritt zu vergrößern. Zur Reduzierung der Antriebsleistung der Antriebe A1, A2 und zur Entlastung der zugehörigen Getriebeelemente kann Gewichtsausgleichszylinder 25 dienen der mit Schlitten 23 verbunden ist.

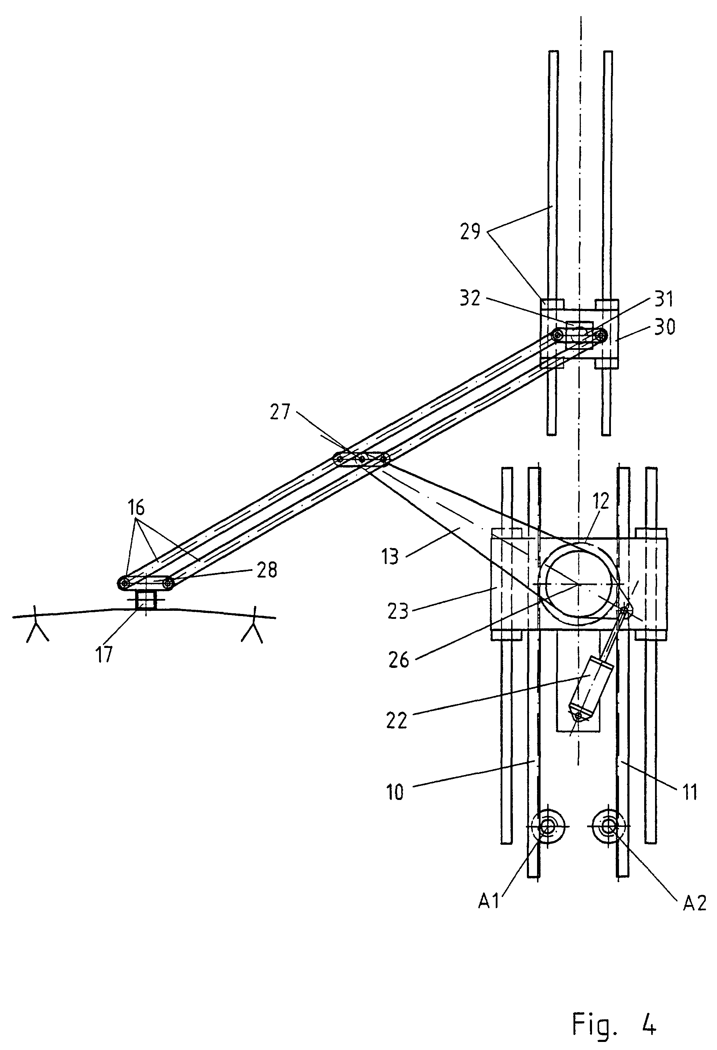

Figur 4 zeigt eine Variante der Darstellung von dem unter Figur 3 beschriebenen Ausführungsbeispiel.

Geändert wurde insbesondere der Transport- bzw. Schwenkarm 13 der jetzt ausgehend von dem Bewegungsmittelpunkt 26 im Punkt 27 des Parallelogramms 16 angreift. Bevorzugt liegt der Punkt 27 auf der halben Strecke der Parallelogrammgelenke 16 und auch die Strecke 26 - 27 entspricht dieser halben Strecke. Durch diese Geometrie liegt die Mitte von Punkt 26 und die Mitte der Parallelogramm Querstrebe 20 auf einer waagerechten Linie, wodurch auch ein waagerechter Fahrweg gewährleistet bzw. möglich ist. Wie bereits in der Prinzipfigur 2 dargestellt sind mit dem Antriebssystem jedoch auch alle beliebigen Fahrkurven in der Ebene realisierbar. Der Hubweg des Schlitten 23 entspricht bei dieser Anordnung dem Hebehub der jeweiligen Fahrkurve.

Im dargestellten Beispiel wirkt der Transportarm 13 wie ein Schwenkantrieb auf das die Saugertraverse 17 tragende Parallelogramm 16.

Zur Erzielung der gewünschten Freiheitsgrade ist eine weitere Linearführung 29 vorgesehen in dem der Schlitten eine Vertikalbewegung ausführt. Am Schlitten 30 ist der obere Teil 31 des Parallelogramm 16 angelenkt. In Wirkverbindung mit Anlenkpunkt 31 kann ein Antrieb 32 vorgesehen werden der durch eine Schwenkbewegung, die über das Parallelogramm 16 auf Saugertraverse 17 übertragen wird, eine Teileverschwenkung ermöglicht. An Stelle des Parallelogramm 16 kann auch ein Einfachhebel verwendet werden und die Lage der Saugertraverse 17 würde über einen Schwenkantrieb in Verbindung mit einem Zahnriemenantrieb entsprechend geregelt.

Die in Figur 4 dargestellte Lösung kann mit geringen Massen ausgeführt werden und führt gegebenenfalls durch Auftrennung der Vertikalbewegung für Zahnstangentrieb und Parallelogramm zu einer günstigen Anbausituation. Die vorgeschlagenen Hebelverhältnisse ergeben sehr einfach zu programmierende Fahrkurven.

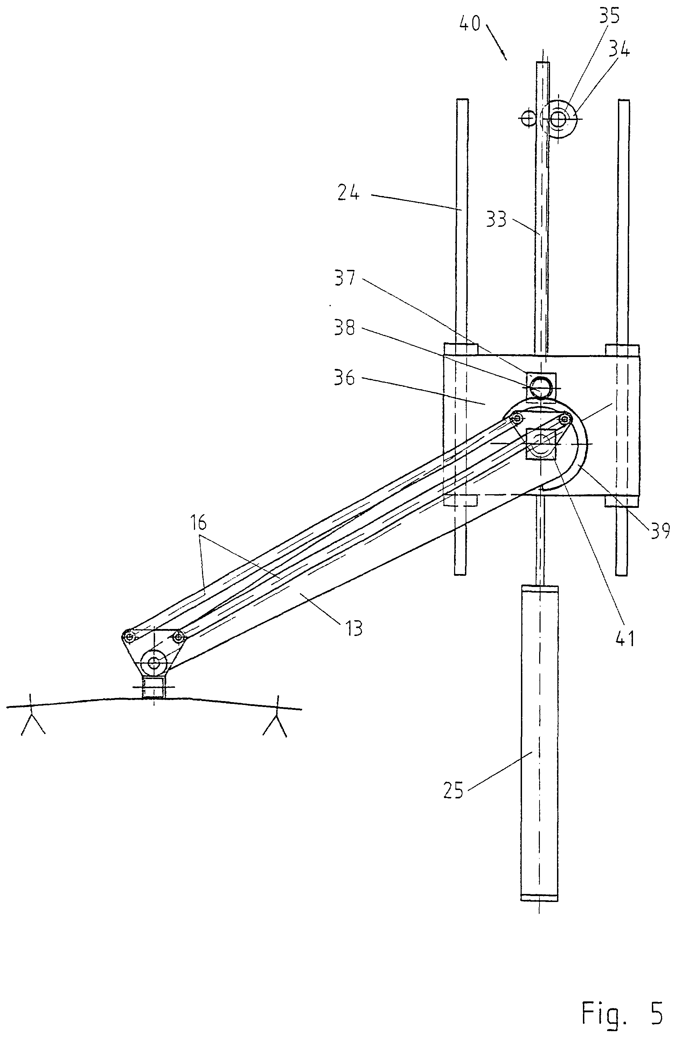

Figur 5 zeigt ein Ausführungsbeispiel mit einem Linearantrieb 40. Auf diese Zahnstange 33 wirkt ein Antrieb 34 durch ein Zahnrad 35. Die Zahnstange 33 ist mit Schlitten 36 verbunden und bei einer Drehbewegung des Antriebes 34 führt der Schlitten 36 eine Vertikalbewegung aus. Auf dem Schlitten 36 befindet sich eine Schwenkeinheit bestehend aus Antrieb 37, Ritzel 38 und Zahnsegment 39. Aufgrund der gewünschten und programmierten Fahrkurve findet die erforderliche Regelung von Linearantrieb 40 und Schwenkantrieb 37 statt. Eine zusätzliche Teileverschwenkung während dem Transportschritt kann durch Schwenkantrieb 41 durch Einwirkung auf das Parallelogramm in bereits erläuterter Weise erfolgen. Insbesondere die Ausführung des Linearantriebes ist bei Figur 5 nur beispielhaft dargestellt und kann durch andere handelsübliche Komponenten wie Kugelrollspindel, Linearmotor usw. ersetzt werden.

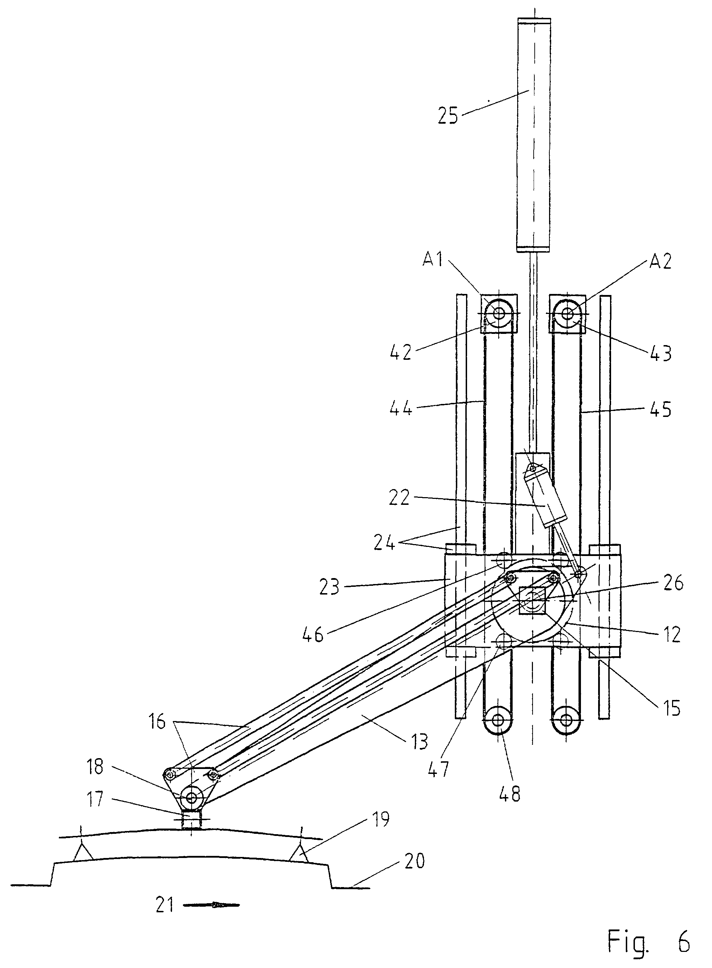

Anstelle der Zahnstangentriebe ist in Figur 6 die bereits unter Figur 2 erwähnte Ausführung mit Zahnriementriebe dargestellt. Mit den Antrieben A1, A2 sind Zahnriemenscheiben 42, 43 verbunden, die als Bewegungsübertragung auf Zahnriemen 44, 45 wirken. Die Zahnriemen 44, 45 tragen doppelseitig das Zahnprofil, wodurch das äußere Zahnprofil dann auf Zahnrad 12 einwirkt. Der komplette Zahnriementrieb besteht dann noch aus Umlenk- und Führungszahnriemenscheiben 46, 47 und 48.

Der durch die Antriebe A1, A2 in Wirkverbindung mit dem Zahnriementrieb auf den Transportarm 13 erreichte Bewegungsablauf ist völlig identisch, wie insbesondere unter Figur 2 dargestellt.

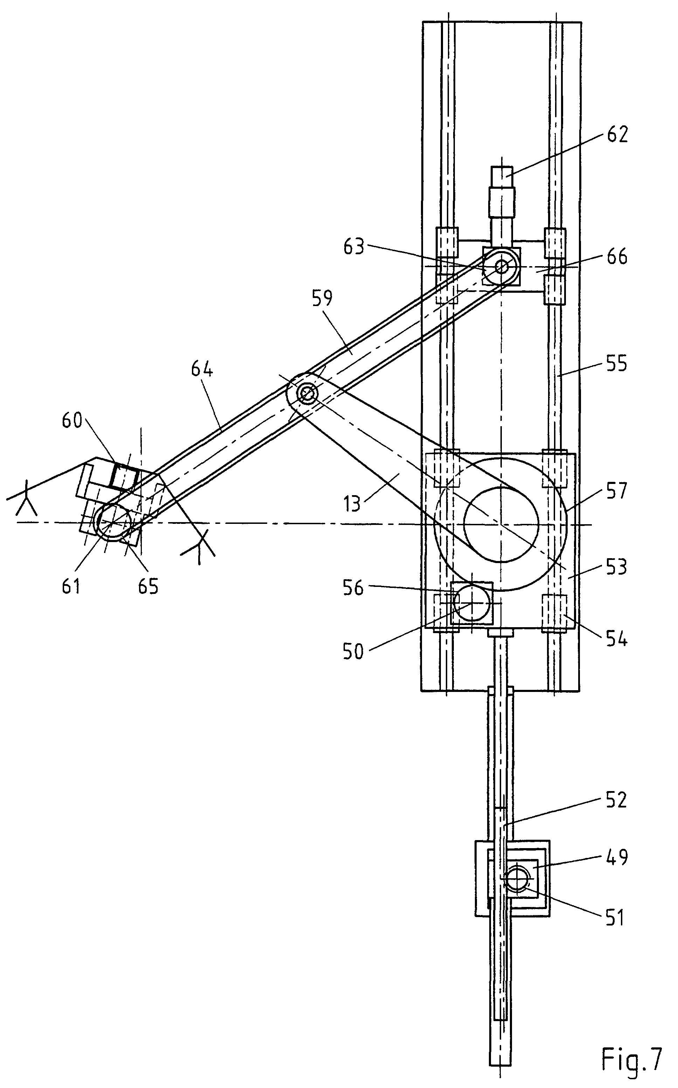

Eine weitere Ausführungsvariante wird in Figur 7 vorgeschlagen. Zur Erzielung der gewünschten Fahrkurven ist ein Hebeantrieb 49 und ein Schwenkantrieb 50 in gemeinsamer bewegungsüberlagerter Funktion oder als einzel angetriebene Bewegung vorgesehen. In günstiger Anordnung ist der Hebeantrieb 49 stationär, z.B. am Pressenständer, angebracht, wodurch die zu beschleunigenden Massen reduziert werden. Beispielhaft wirkt der Hebeantrieb 49 über ein Zahnritzel 51 auf eine Zahnstange 52. Die translatorische Bewegung überträgt die Zahnstange 52 auf einen Schlitten 53. Schlitten 53 ist über Führungselemente 54 in Führung 55 vertikal verschiebbar gelagert.

Auf Schlitten 53 ist Schwenkantrieb 50 befestigt der über Zahnritzel 56 und Zahnrad 57 den Schwenkhebel 13 antreibt. Der Schwenkhebel 13 ist ähnlich wie in Figur 4 an dem Antriebshebel 59 angelenkt und es gelten auch die in Figur 4 beschriebenen bevorzugten geometrischen und kinematischen Verhältnisse.

Die Aufnahme für das eigentliche Werkstückspannsystem, z.B. Saugerbalken oder Greifer, ist mit 60 bezeichnet. Sollte eine Lageveränderung des Werkstückes, aufgrund unterschiedlicher Entnahme- und Einlegepositionen, erforderlich sein ist die Aufnahme 60 um den Drehpunkt 61 schwenkbar. Die Schwenkbarkeit wird geregelt über den Antrieb 62 der in Wirkverbindung mit Riemenscheibe 63 und Zahnriemen 64 die mit der Schwenkachse verbundene Riemenscheibe 65 antreibt. Der in Führungen 55 vertikal verfahrbare Schlitten 66 dient zur Lagerung des Antriebshebels 59 und des Antriebes 62.

Die Erfindung ist nicht auf das beschriebene und dargestellte Ausführungsbeispiel beschränkt. Sie umfaßt auch alle fachmännischen Ausgestaltungen im Rahmen des geltenden Anspruches 1.

Möglich ist auch die Verwendung von Verbindungswellen, ausgehend von den jeweiligen Antriebsdrehpunkten, quer zur Teiletransportrichtung um 2 Transportsysteme mechanisch miteinander zu kuppeln zum Zwecke der Synchronisation und/oder der Möglichkeit die Zahl der Antriebe zu reduzieren.

### Bezugszeichenliste:

- 1: Großteilstufenpresse
- 2: Transportsystem
- 3: Pressenständer
- 4: Umformstufe
- 5: Umformstufe
- 6: Werkzeugoberteil
- 7: Stößel
- 8: Zahnrad links
- 9: Zahnrad rechts
- 10: Zahnstange links
- 11: Zahnstange rechts
- 12: Zahnrad
- 13: Transportarm
- 14: Tabelle
- 15: Schwenkantrieb
- 16: Parallelogrammgelenk
- 17: Saugertraverse
- 18: Drehpunkt
- 19: Saugnäpfe
- 20: Teil
- 21: Pressendurchlaufrichtung
- 22: Gewichtsausgleich
- 23: Schlitten
- 24: Linearführungssystem
- 25: Gewichtsausgleichzylinder
- 26: Bewegungsmittelpunkt
- 27: Parallelogrammpunkt
- 28: Parallelogramm Querstrebe
- 29: Linearführung
- 30: Schlitten
- 31: Parallelogramm
- 32: Schwenkantrieb
- 33: Zahnstange
- 34: Antrieb
- 35: Zahnrad
- 36: Schlitten
- 37: Schwenkantrieb
- 38: Ritzel
- 39: Zahnsegment
- 40: Linearantrieb
- 41: Schwenkantrieb
- 42: Zahnriemenscheibe
- 43: Zahnriemenscheibe
- 44: Zahnriemen
- 45: Zahnriemen
- 46: Zahnriemenscheibe
- 47: Zahnriemenscheibe
- 48: Zahnriemenscheibe
- 49: Hebeantrieb
- 50: Schwenkantrieb
- 51: Zahnritzel
- 52: Zahnstange
- 53: Schlitten
- 54: Führungselemente
- 55: Führungen
- 56: Zahnritzel
- 57: Zahnrad
- 59: Antriebshebel
- 60: Aufnahme
- 61: Drehpunkt
- 62: Antrieb
- 63: Riemenscheibe
- 64: Zahnriementrieb
- 65: Riemenscheibe
- 66: Schlitten

## Patentansprüche

1. Einrichtung zum Transportieren von Werkstücken in einer Presse, Pressenstraße, Großteil-Stufenpresse, wobei eine Bearbeitungsstation (4, 5) wenigstens eine, das Werkstück transportierende unabhängige Transporteinrichtung (2) zur Durchführung einer zweiachsigen Transportbewegung auf weist, wobei die Transporteinrichtung (2) ein Antriebssystem für einen Schwenk- bzw. Transportarm (13) umfasst, welches wenigstens zwei Antriebsmotoren (A1, A2, 8, 9, 34, 37, 49, 50) besitzt, die jeweils auf ein Bewegungsübertragungsmitt (10, 11, 33, 39, 44, 45, 52, 57) einwirken und wenigstens ein Antriebsmotor stationär angeordnet ist, wobei eine Regelung der Drehrichtung und der Drehgeschwindigkeit bzw. Stillstand der Antriebsmotoren eine abgestimmte Bewegung der Bewegungsübertragungsmittel (10, 11, 33, 39, 44, 45, 52, 57) bewirken und mittels einer Bewegungsüberlagerung eine beliebige programmierbare Fahrkurve des Schwenk- bzw. Transportarms (13, 16, 58, 59) einstellbar ist, wobei der Schwenk- bzw. Transportarm (13) an einem Schlitten (23, 36, 53) mit Linearführungen (24, 54, 55) gelagert und mit einem Parallelogrammgelenkarm (16) oder Antriebshebel (59) versehen ist, **dadurch gekennzeichnet, dass** die Bewegungsübertragungsmittel (10, 11, 33, 39, 44, 45, 52, 57) zur Durchführung einer Längsbewegung und insbesondere einer Hub- bzw. Senkbewegung eines Lagerschlittens (23, 36, 53) für den Schwenk- bzw. Transportarm (13, 16, 59) als Zahnrad/Zahnstangenantrieb (8-12, 33, 35, 38, 39, 51, 52, 56, 57) und/oder als Zahnrad/Zahnriemenantrieb (12, 42-48) ausgebildet ist.

2. Einrichtung nach Ansprüch 1, **dadurch gekennzeichnet, dass** eine Längsbewegung und insbesondere eine Hub- bzw. Senkbewegung des Lagerschlittens (23) für den Schwenk- bzw. Transportarm (13) mittels zwei parallel angeordneten Zahnstangen (10, 11) erfolgt, die von den stationären Antriebsmotoren (A1, A2) über Zahnräder (8, 9) antreibbar sind.

3. Einrichtung nach einem der vorhergehenden Ansprüche, **dadurch gekennzeichnet, dass** zwei parallel angeordnete Zahnstangen (10, 11) gemeinsam auf ein Antriebszahnrad (12) für den Schwenk- bzw. Transportarm (13) einwirken, derart, dass eine Hub- bzw. Senkbewegung eines Tragschlittens (23) und/oder eine Drehbewegung eines an dem Tragschlitten (23) gelagerten Schwenk- bzw. Transportarms (13) einstellbar ist.

4. Einrichtung nach einem der vorhergehenden Ansprüche, **dadurch gekennzeichnet, dass** der Schwenk- bzw. Transportarm (13) ein Parallelogrammgelenk (16) umfasst, welches vorzugsweise endseitig eine vorzugsweise schwenkbare Saugertraverse (17) zur Werkstückhalterung aufweist.

5. Einrichtung nach einem der vorhergehenden Ansprüche, **dadurch gekennzeichnet, dass** die Schwenkbewegung des Schwenk- bzw. Transportarms (13) auf einen Parallelogrammgelenkarm (16) übertragbar ist, welches seinerseits endseitig einen Führungsschlitten (30) in einer vertikalen Lihearführung (29) aufweist und welches gegenüberliegend zum Führungsschlitten (30) eine Saugertraverse (17) für eine Teilaufnahme trägt, wobei der Schwenk- bzw. Transportarm (13) vorzugsweise mittig am Parallelogrammgelenkarm (16) angelenkt ist und wobei vorzugsweise die Länge des Transportarms (13) etwa die halbe Länge des Gelenkarms (16) aufweist.

6. Einrichtung nach Anspruch 1, **dadurch gekennzeichnet, dass** dem Parallelogrammgelenkarm (16) oder Antriebshebel (59) ein Verstellantrieb (15, 32, 62-65) als Schwenkantrieb für die Saugertraverse (17) zugeordnet ist.

7. Einrichtung nach einem der vorherigen Ansprüche, **dadurch gekennzeichnet, dass** die Hub- bzw. Senkbewegung des Lagerschlittens (23, 36) für den Schwenk- bzw. Transportarm (13) und/oder die Verstellbewegung des Parallelogrammgelenkarms (13, 16) mittels wenigstens eines Gewichtsausgleichszylinders (22, 25) unterstützt ist.

8. Einrichtung nach einem der vorhergehenden Ansprüche 1 bis 7, **dadurch gekennzeichnet, dass** die Bewegung des Lagerschlittens (36, 53) für den Schwenk- bzw. Transportarm (13) mittels eines Zahnrad/Zahnstangenantrieb (33-35, 49, 51, 52) erfolgt, wobei die Schwenkbewegung des Schwenk- bzw. Transportarms (13) mittels eines separaten Schwenkantriebs (37-39, 50, 56, 57) erfolgt.

9. Einrichtung nach einem der Ansprüche 1 bis 8, **dadurch gekennzeichnet, dass** zwei parallel angeordnete Zahnriementriebe (42-48) gemeinsam auf ein Antriebszahnrad (12) für den Schwenk- bzw. Transportarm (13) einwirken, derart, dass eine Hub- bzw. Senkbewegung eines Tragschlittens (23) und/oder eine Drehbewegung eines an dem Tragschlitten (23) gelagerten Schwenk- bzw. Transportarms (13) einstellbar ist.

## Claims

1. Device for conveying workpieces in a press, press working line, progressive bulk line press, a machining station (4, 5) having at least one independent conveying device (2) conveying the workpiece for carrying out a biaxial conveying movement, the conveying device (2) comprising a drive system for a swivel or conveying arm (13), which drive system has at least two drive motors (A1, A2, 8, 9, 34, 37, 49, 50) acting respectively on a movement transmission means (10, 11, 33, 39, 44, 45, 52, 57) and at least one drive motor is arranged stationarily, a control of the direction of rotation and the speed of rotation or stoppage of the drive motors bringing about a synchronised movement of the movement transmission means (10, 11, 33, 39, 44, 45, 52, 57) and any programmable travel curve of the swivel or conveying arm (13, 16, 58, 59) being adjustable by means of a movement superimposition, the swivel or conveying arm (13) being mounted on a cradle (23, 36, 53) with linear guides (24, 54, 55) and being provided with a parallelogram articulated arm (16) or drive lever (59), **characterised in that** the movement transmission means (10, 11, 33, 39, 44, 45 52, 57) for carrying out a longitudinal movement and in particular a lifting or lowering movement of a bearing cradle (23, 36, 53) for the swivel or conveying arm (13, 16, 59) is designed as a gear wheel/toothed rack drive (8 to 12, 33, 35, 38, 39, 51, 52, 56, 57) and/or as a gear wheel/toothed belt drive (12, 42 to 48).

2. Device according to claim 1, **characterised in that** a longitudinal movement and in particular a lifting or lowering movement of the bearing cradle (23) for the swivel or conveying arm (13) take place by means of two toothed racks (10, 11) arranged in parallel which can be driven via gear wheels (8, 9) by the stationary drive motors (A1, A2).

3. Device according to any one of the preceding claims, **characterised in that** two toothed racks (10, 11) arranged in parallel act together on a driving gear wheel (12) for the swivel or conveying arm (13), in such a way that a lifting or lowering movement of a carrying cradle (23) and/or a rotary movement of a swivel or conveying arm (13) mounted on the carrying cradle (23) can be adjusted.

4. Device according to any one of the preceding claims, **characterised in that** the swivel or conveying arm (13) comprises a parallelogram joint (16), preferably having at its end a preferably swivellable suction cross-rail (17) to hold the workpiece.

5. Device according to any one of the preceding claims, **characterised in that** the swivel movement of the swivel or conveying arm (13) can be transmitted to a parallelogram articulated arm (16), in turn having at its end a guide cradle (30) in a vertical liner guide (29) and carrying a suction cross-rail (17) for a partial pick up remote from the guide cradle (30), the swivel or conveying arm (13) preferably being articulated centrally on the parallelogram articulated arm (16) and the length of the conveying arm (13) preferably being about half the length of the articulated arm (16).

6. Device according to claim 1, **characterised in that** an adjusting drive (15, 32, 62 to 65) is associated as swivel drive for the suction cross-rail (17) with the parallelogram articulated arm (16) or drive lever (59).

7. Device according to any one of the preceding claims, **characterised in that** the lifting or lowering movement of the bearing cradle (23, 36) for the swivel or conveying arm (13) and/or the adjusting movement of the parallelogram articulated arm (13, 16) is supported by means of at least one weight compensating cylinder (22, 25).

8. Device according to any one of the preceding claims 1 to 7, **characterised in that** the bearing cradle (36, 53) for the swivel or conveying arm (13) is moved by means of a gear wheel/toothed rack drive (33 to 35, 49, 51, 52), the swivel movement of the swivel or conveying arm (13) taking place by means of a separate swivel drive (37 to 39, 50, 56, 57).

9. Device according to any one of claims 1 to 8, **characterised in that** two toothed belt drives (42 to 48) arranged in parallel act together on a driving gear wheel (12) for the swivel or conveying arm (13) in such a way that a lifting or lowering movement of a carrying cradle (23) and/or a rotary movement of a swivel or conveying arm (13) mounted on the carrying cradle (23) can be adjusted.

## Revendications

1. Dispositif pour transporter des pièces dans une presse, un train de presses, une presse à étages pour grandes pièces, un poste de traitement (4, 5) présentant au moins un dispositif de transport (2) indépendant transportant la pièce pour effectuer un mouvement de transport à deux axes, le dispositif de transport (2) comportant un système d'entraînement pour un bras de transport ou pivotant (13), qui possède au moins deux moteurs d'entraînement (A1, A2, 8, 9, 34, 37, 49, 50), qui, à chaque fois, agissent sur un moyen de transmission de mouvement (10, 11, 33, 39, 44, 45, 52, 57) et au moins un moteur d'entraînement est agencé de façon fixe, une régulation du sens de rotation et de la vitesse de rotation ou l'arrêt des moteurs d'entraînement permettant un mouvement accordé des moyens de transmission de mouvement (10, 11, 33, 39, 44, 45, 52, 57) et, au moyen d'une superposition de mouvement, une courbe de marche programmable quelconque du bras pivotant ou de transport (13, 16, 58, 59) peut être réglée, le bras de transport ou pivotant (13) étant monté sur un chariot (23, 36, 53) avec des guides linéaires (24, 54, 55) et étant muni d'un bras articulé de parallélogramme (16) ou d'un levier d'entraînement (59),
**caractérisé en ce que** les moyens de transmission de mouvement (10, 11, 33, 39, 44, 45, 52, 57) sont réalisés pour effectuer un mouvement longitudinal et, en particulier, un mouvement de levage ou d'abaissement d'un chariot de support (23, 36, 53) pour le bras de transport ou pivotant (13, 16, 59) comme entraînement à roue dentée/crémaillère (8-12, 33, 35, 38, 39, 51, 52, 56, 57) et/ou comme entraînement à roue dentée/courroie crantée (12, 42-48).

2. Dispositif selon la revendication 1,
**caractérisé en ce qu'**un mouvement longitudinal et, en particulier, un mouvement de levage ou d'abaissement du chariot de support (23) pour le bras pivotant ou de transport (13) est effectué au moyen de deux crémaillères (10, 11) agencées de façon parallèle, qui peuvent être entraînées par les moteurs d'entraînement fixes (A1, A2), par l'intermédiaire de roues dentées (8, 9).

3. Dispositif selon une des revendications précédentes,
**caractérisé en ce que** deux crémaillères (10, 11) agencées parallèlement agissent en commun sur une roue dentée d'entraînement (12) pour le bras de transport ou pivotant (13), de sorte qu'un mouvement de levage ou d'abaissement d'un chariot porteur (23) et/ou un mouvement rotatif d'un bras de transport ou pivotant (13) monté sur le chariot porteur (23) peuvent être réglés.

4. Dispositif selon une des revendications précédentes,
**caractérisé en ce que** le bras de transport ou pivotant (13) comporte une articulation de parallélogramme (16), qui présente avantageusement, du côté d'extrémité, une traverse d'aspiration (17) pouvant avantageusement pivoter pour le maintien des pièces.

5. Dispositif selon une des revendications précédentes,
**caractérisé en ce que** le mouvement pivotant du bras de transport ou pivotant (13) peut être transmis sur un bras articulé de parallélogramme (16), qui, de son côté, présente, du côté d'extrémité, un chariot de guidage (30) dans un guide linéaire vertical (29) et qui porte, de façon opposée au chariot de guidage (30), une traverse d'aspiration (17) pour une réception partielle, le bras de transport ou pivotant (13) étant articulé avantageusement de façon centrale sur le bras articulé de parallélogramme (16) et avantageusement la longueur du bras de transport (13) représentant environ la moitié de la longueur du bras articulé (16).

6. Dispositif selon la revendication 1,
**caractérisé en ce qu'**un entraînement de réglage (15, 32, 62-65) est associé au bras articulé de parallélogramme (16) ou au levier d'entraînement (59) comme entraînement de pivotement pour la traverse d'aspiration (17).

7. Dispositif selon une des revendications précédentes,
**caractérisé en ce que** le mouvement de levage ou d'abaissement du chariot de support (23, 36) pour le bras de transport ou pivotant (13) et/ou le mouvement de réglage du bras articulé de parallélogramme (13, 16) sont aidés au moyen d'au moins un vérin de compensation de poids (22, 25).

8. Dispositif selon une des revendications précédentes 1 à 7,
**caractérisé en ce que** le mouvement du chariot de support (36, 53) pour le bras de transport ou pivotant (13) est effectué au moyen d'un entraînement à roue dentée/crémaillère (33-35, 49, 51, 52), le mouvement de pivotement du bras de transport ou pivotant (13) étant effectué au moyen d'un entraînement pivotant séparé (37-39, 50, 56, 57).

9. Dispositif selon une des revendications 1 à 8,
**caractérisé en ce que** deux mécanismes à courroie crantée (42-48) agencés parallèlement agissent en commun sur une roue dentée d'entraînement (12) pour le bras de transport ou pivotant (13), de sorte qu'un mouvement de levage ou d'abaissement d'un chariot porteur (23) et/ou un mouvement rotatif d'un bras de transport ou pivotant (13) monté sur le chariot porteur (23) peuvent être réglés.
